Europäisches Patentamt

European Patent Office

Office européen des brevets

(11) Veröffentlichungsnummer: **0 183 113 B1**

# EUROPÄISCHE PATENTSCHRIFT

(45) Veröffentlichungstag der Patentschrift: **11.09.91**

(21) Anmeldenummer: **85114295.0**

(22) Anmeldetag: **09.11.85**

(51) Int. Cl.5: **H01S  3/0977**, H01S 3/22, H01S 3/03, H01S 3/134

(54) Verfahren zum Betreiben eines elektrisch angeregten Gaslasers.

(30) Priorität: **29.11.84 DE 3443539**

(43) Veröffentlichungstag der Anmeldung:
**04.06.86 Patentblatt  86/23**

(45) Bekanntmachung des Hinweises auf die
Patenterteilung:
**11.09.91 Patentblatt  91/37**

(84) Benannte Vertragsstaaten:
**BE CH DE FR GB IT LI NL SE**

(56) Entgegenhaltungen:
EP-A- 0 081 081     EP-A- 0 096 899
DE-A- 3 031 954     DE-A- 3 323 856
US-A- 3 818 375     US-A- 4 258 334

APPLIED PHYSICS LETTERS, Band 32, Nr. 11,
1. Juni 1978, New York, GIBSON et al.:
"Sealed multiatmosphere CO2 TEA laser;
Seed-gas compartible system using unhea-
ted oxyde catalyst", Seiten 726-727

(73) Patentinhaber: **ELTRO GmbH Gesellschaft für
Strahlungstechnik
Kurpfalzring 106 Postfach 10 21 20
W-6900 Heidelberg 1(DE)**

(72) Erfinder: **Prein, Franz, Dipl.-Phys.
Tulpenweg 3
W-6901 Waldhilsbach(DE)**
Erfinder: **Karning, Heinrich
Albert Fritz Strasse 6
W-6900 Heidelberg(DE)**

(74) Vertreter: **Muschka, Wilhelm, Dipl.-Ing.
Eltro GmbH Gesellschaft für Strahlungstech-
nik Kurpfalzring 106 Postfach 10 21 20
W-6900 Heidelberg 1(DE)**

IEEE JOURNAL OF QUANTUM ELECTRONICS, Band QE-19, Nr. 10, Oktober 1983, New York, MARCHETTI et al.: "Compact sealed TEA CO2 laser with Corona-Diacharge Preionisation", Seiten 1488-1492

REVIEW OF SCIENTIFIC INSTRUMENTS, Band 53, Nr. 12, Dezember 1982, New York, PACE et al.: "Miniature sealed TEA CO2 laser with integral semiconducture preionisation", Seiten 1861-1863

CRC Handbook of Chemistry and Physics, 59th edition, 1978-1979, CRC Press, West Palm Beach, Seiten E63-65, E74-78

## Beschreibung

Die Erfindung bezieht sich auf ein Verfahren zum Betreiben eines elektrisch angeregten Gaslasers nach dem Oberbegriff des Anspruchs 1.

Ein Laser dieser Art ist aus der EP-A-0 081081 bekannt. Bei diesem Laser liegt das Hauptaugenmerk auf dem Gleichgewicht der Gaszusammensetzung, das mit Hilfe von speziell ausgebildeten Oberflächenstrukturen der Laserinnenwände, die auch Träger von Katalysatoren sein. können, erzielt wird.

Ein solcher Katalysator sollte - da es sich um ein geschlossenes System handelt - eine hohe Effizienz und große Lebensdauer besitzen. In der Praxis hat es sich jedoch bei diesen ansonsten durchaus brauchbaren Lasern hoher Leistung als nachteilig erwiesen, daß die Entladung nach Pausen und/oder Temperaturänderungen in Pulsleistung und -form schwankt. Auch kann die Dissoziation der Moleküle unerwünscht große Werte annehmen. Ferner können die durch Ionisierung oder Elektronenanlagerung entstehenden Radikale, Ionen oder Komplexe oder neuen Moleküle auf die Entladung (Pumpvorgang) und/oder auf die Emission des Lasers (Laservorgang) negativ einwirken.

Zusammenfassend kann man sagen, daß Dissoziationen, Umsetzungen, Adsorptionen und Desorptionen an inneren Oberflächen des Losers die Gaszusammensetzung in Abhängigkeit von Katalysator, Zeit, Temperatur, Druck und Mischungsverhältnis ändern. Dies gilt auch für niederiosierende Moleküle, wie z.B. Xylole oder Amine, wie sie etwa "Sealed multiatmosphere $CO_2$ TEA laser: seed-gas compatible system using unheated catalyst" by R.R. Gibson et al in Appl. Phys. Lett. Vol. 32 (11), 1.6.78, zu entnehmen sind. Lange Lagerzeiten und Temperaturschwankungen bewirken z.B., daß Moleküle ausgasen bzw. ganz verschwinden. In der Folge führt dies, insbesondere bei hohen Schußzahlen unter extremen Temperaturen, zu dem bisher noch nicht erkannten Anlauf-Phänomen, daß der jeweils erste Laserschuß gar nicht vorhanden oder zumindest mangelhaft ausgebildet ist; häufig betrifft dies auch noch eine ganze Anzahl von auf den ersten Schuß folgenden Schüssen. Bei tiefen Temperaturen, hohem Druck und einem hochaktiven Katalysator kann dies durchgehend und sogar für ganze Pulsserien zutreffen, insbesondere, wenn nur kleine Pulsfolgefrequenzen eingestellt sind. Ein Ausfall oder eine Degeneration der ersten Schüsse durch schlechte elektrische Entladung führt aber mitunter auch zu erheblichen Schäden an den optischen und mechanischen Teilen sowie zu unerwünschten Effekten hinsichtlich der Ionisierung u.a., so daß insgesamt die Lebensdauer eines solchen Lasers beeinträchtigt wird.

Aus Applied Physics Letters, Band 32, Nr. 11, Juni 1978, Seiten 726 bis 727 ist ein Verfahren zum Betreiben eines elektrisch angeregten Gaslasers mit geschlossenem Gehäuse, einem Resonatorraum, einem Katalysator und einer mit dem Resonatorraum verbundenen, ausgasenden,in einer Kammer befindlichen Oberfläche bekannt, bei dem dem Lasergas gut ionisierende und nicht anlagernde Moleküle (Trimethylamin) beigemischt werden und diese Beimischung physikalisch (in der Vorionisation) aktiviert werden. Wie sodann "CRC Handbuch of Chemistry and Physics, 59$^{th}$ edition, 1978-1979, CRC - Press, West Palm Beach, pages E 63-65, E 74-78" zu entnehmen ist, beträgt die Ionisierungsenergie von Trimethylamin 7,8 eV, wobei das Dipolmoment einen Wert von 0,61 Debye besitzt.

Bei dem in EP-A- 0 081 081 beschriebenen Verfahren werden dem Lasergas zur Beeinflussung der Druck- und Temperaturverhältnisse unter anderem höhere Kohlenwasserstoffe beigemischt.

Zum Stand der Technik sei außerdem auf folgende Fachaufsätze hingewiesen: In "Ultraminiature high-power gas discharge lasers" von V. Hasson und H.M. von Bergmann, in Rev. Sci. Instrum., 50 (1), Jan. 1979, S. 59-63, werden Materialprobleme, Lebensdauer, Leistung und elektrische Parameter von sehr kleinen, im Sealed-off-Betrieb arbeitenden $N_2$-Lasern untersucht. In "Gas-Chromatographic Studies of the Products in a Sealed TE-$CO_2$ Laser Discharche" von Dhruba J. Biswas und U.K. Chatterjee, in IEEE Journal of Quantum Electronics, VOL. QE-17, No. 9, Sep. 1981, S. 1964-1966, finden Untersuchungen der Dissoziation der Gaschemie, insbesondere des Lasergases, statt. In "Miniature, sealed TEA-$CO_2$ lasers with integral semiconductive preionization" von Paul Pace, Pierre Mathieu und James Cruickshank, in Rev. Sci. Instrum. 53 (12), Dez. 1982, S. 1861-1863, wird angestrebt, die Lebensdauer und die Pulsfolgefrequenz durch spezielle Vorionisierung zu verbessern. Und schließlich in "Compact Sealed TEA-$CO_2$ Lasers with Corona-Discharge Preionization", von R. Marchetti, E. Penco und G. Salvetti, in IEEE Journal of Quantum Electronics, Vol. QE-19, Nov. 10, Okt. 1983, S. 1488-1492, werden die Eigenschaften eines kleinen Lasers im Hinblick auf Leistung und Pulsform optimiert.

Dem Anmeldungsgegenstand liegt die Aufgabe zugrunde, den gattungsgemäßen Laser so auszubilden und zu betreiben, daß noch (mehr oder weniger langen) Standzeiten und Temperaturänderungen auch die jeweils ersten Laserschüsse gleichmäßig sauber reproduziert werden. Diese Aufgabe wird erfindungsgemäß durch die im Kennzeichen des Anspruchs 1 genannten Merkmale gelöst. Unter gut vorionisierten Atomen und Molekülen werden hierbei solche verstanden, die mit niederer Energie und hohem Wirkungsquerschnitt ionisieren und etwa einem Tabellenwerk, z.B. dem "Taschenbuch für Chemiker und Physiker" von D'ANS und LAX zu entnehmen sind. Die Eigenschaft einer mehr oder minder guten Anlagerung läßt sich dagegen aus der Molekülstruktur ableiten. Beispielsweise lagern asymmetrisch gebaute oder mit einem Dipolmoment ausgestattete oder auch chemisch aktive Moleküle relativ stärker an Oberflächen an und scheiden daher für eine Anwendung wie die vorliegende aus. Dies ist z.B. aus "Solid surfaces and heterogeneous Catalysis" von D.A. King et al ersichtlich.

Für die praktische Handhabung kann es hierbei von Vorteil sein, wenn mittels des in Anspruch 1 angegebenen Verfahrens als Substanzklassen z.B. Benzol, Tulol oder Naphthalin stabilisiert werden.

Auf diese Weise kann man die für eine homogenisierende Vorionisation und Hauptentladung im Resonatorraum erforderlichen, im allgemeinen niederionisierenden oder selektiv die Ionisierung des Gases fördernden oder auch in zu niederer Konzentration vorhandenen Beimischungen erzeugen bzw. stabilisieren. Dadurch wiederum lassen sich die chemischphysikalischen Vorgänge innerhalb eines solchen Lasers, der ein $CO_2$-, CO-, $N_2$-, Eximer-, Ammoniak- oder Metalldampf-Laser sein kann, besser beherrschen, so daß auch die oft gar nicht oder zumindest mangelhaft ausgebildeten ersten Laserschüsse sowie die zumeist nur mit 80-90 % Energie vorhandenen Zweitschüsse optimal ausgebildet werden.

Die elektrische Anpassung von Pulser und angekoppeltem Laser gemäß Anspruch 2 erbringt den Vorteil, daß wenig elektrische Energie reflektiert, d.h. ein guter Wirkungsgrad erzielt und damit ein für die homogene Entladung erforderlicher kurzer elektrischer Puls geeigneter Form erzeugt wird.

Das Zurückhalten bzw. Durchlassen von Molekülen nach Anspruch 3 erfolgt mit dem Anwendungsfall angepaßten Mitteln, die ein Trennen der Moleküle erlauben, beispielsweise mit Membranen, Molekularsieben oder Katalysatoren. Als eines von vielen Beispielen sei etwa das Molekularsieb 4 A mit nominalem Porendurchmesser von 0.4 nm (4 Å) zur Trennung von Molekülen mit Abmessungen kleiner und größer als 0.4 nm (4 Å) herausgegriffen.

Auch die restlichen Unteransprüche enthalten Ausführungsarten der Erfindung.

Der Betrieb abgeschlossener Gaslaser (= Sealed-off-Betrieb) mit höheren Gasdrücken von z.B. einigen Atmosphären sowie bei hoher und tiefer Temperatur und langen Standzeiten, mit großen Konzentrationen aktiver Moleküle, wie dies z.B. bei Anwendungen in der Luft- und Raumfahrt häufig erforderlich ist, gestaltet sich vergleichsweise schwierig. Dabei "entartet" die elektrische Entladung der ersten Schüsse leicht zur Bogen- und Funkenentladung. Dies wiederum zieht oft die Folge einer gefährlichen Aufheizung einzelner Bereiche im Laserinneren, wie z.B. der Elektroden, nach sich oder führt zu Sputterraten, das heißt Materialabtrag durch Feld- und Plasmaeffekte, die die Lebensdauer der Elektroden und Spiegel reduzieren. Die im Resonatorraum befindlichen Moleküle werden dann in großer Zahl ionisiert und auch dissoziiert sowie eventuell in Radikale, Ionen und neue Moleküle umgewandelt. Das Gasgemisch befindet sich darum nicht mehr im Gleichgewicht. Laserleitung, Pulsform, Entladung und Lebensdauer des Lasers werden negativ beeinflußt.

Diese Schwierigkeiten können durch die vorgeschlagenen Maßnahmen der Beeinflussung von im Gasraum befindlichen Atomen und Molekülen oder der Oberflächen des Laserinneren weitgehend behoben werden.

**Patentansprüche**

1. Verfahren zum Betreiben eines elektrisch angeregten, gepulsten Gaslasers mit geschlossenem Gasraum bei tiefen Temperaturen, hohem Druck und bei Verwendung eines hochaktiven Katalysators, **dadurch gekennzeichnet,** daß dem Lasergas gut vor ionisierende Atome oder Moleküle beigemischt werden, die sich an den Oberflächen des Katalysators und des Laserinneren nicht anlagern, und daß vor dem Zünden des Laserpulses und ohne daß dabei Laserpulse entstehen, elektrische Entladungen mit reduzierter Spannung erzeugt werden, die zur Desorption der niederionisierenden Atome oder Moleküle von den Oberflächen des Katalysators und des Laserinneren führen.

2. Verfahren nach Anspruch 1 **dadurch gekennzeichnet,** daß ein der Geometrie hinsichtlich Induktivität und Kapazität angepaßter Pulserzeuger für geeignete Pulsformen ausgewählt wird.

3. Verfahren nach Anspruch 1 oder 2, **dadurch gekennzeichnet,** daß Moleküle, die für eine homogene Entladung benötigt werden, mit Hilfe von selektiven Wänden im Laserinneren zurückgehalten und andere, umzusetzende, zu reinigende und zu regenerierende Moleküle mit denselben und/oder anderen Wänden durchgelassen werden.

4. Verfahren nach einem der Ansprüche 1 bis 3, **dadurch gekennzeichnet,** daß das Beimischen kontinuierlich oder stoßweise erfolgt.

5. Verfahren nach Anspruch 2, **dadurch gekennzeichnet,** daß der Pulserzeuger nach einer Zeitlogik arbeitet und die Amplitude und Pulsform festlegt.

## Claims

1. Method for driving an electrically energised, pulsed gas laser with an enclosed gas chamber at low temperatures, high pressure and using a highly radioactive catalyst, characterised in that atoms or molecules, which pre-ionise to a satisfactory degree and do not accumulate on the surfaces of the catalyst and the interior of the laser, are mixed with the laser gas; and in that before the laser pulse is ignited, and without laser pulses being produced in this connection, electrical charges with reduced voltage are produced which lead to the desorption of the low ionising atoms or molecules from the surfaces of the catalyst and the laser interior.

2. Method according to Claim 1, characterised in that a pulse generator, which is adapted to the geometry with respect to inductance and capacitance, is selected for suitable pulse shapes.

3. Method according to Claim 1 or 2, characterised in that the molecules which are required for a homogeneous discharge, are retained by means of selective walls in the laser interior, and other molecules which are to be converted, cleaned and regenerated, are filtered by means of these walls and/or by means of other walls.

4. Method according to one of Claims 1 to 3, characterised in that mixing occurs continuously or in an interrupted manner.

5. Method according to Claim 2, characterised in that the pulse generator operates according to timing logic and determines the amplitude and pulse shape.

## Revendications

1. Procédé pour faire fonctionner un laser à gaz pulsé, excité électriquement et comportant un espace fermé logeant le gaz, à de basses températures, sous une pression élevée et moyennant l'utilisation d'un catalyseur présentant une grande activité, caractérisé en ce qu'on mélange au gaz du laser des atomes ou des molécules que l'on peut bien préioniser et qui ne se fixent pas aux surfaces du catalyseur et de l'intérieur du lazer, et qu'avant l'amorçage de l'impulsion laser et sans qu'il apparaisse des impulsions laser, on produit, au moyen d'une tension réduite, des décharges électriques, qui conduisent à une désorption des atomes ou des molécules, qui s'ionisent faiblement, à partir des surfaces du catalyseur et de l'intérieur du laser.

2. Procédé selon la revendication 1, caractérisé en ce qu'on choisit un générateur d'impulsions qui est adapté à la géométrie du point de vue de l'inductance et de la capacité et sert à produire des formes appropriées d'impulsions.

3. Procédé selon la revendication 1 ou 2, caractérisé en ce que des molécules, qui sont nécessaires pour une décharge homogène, sont retenues à l'intérieur du laser au moyen de parois sélectives et que d'autres molécules, qui doivent être transformées, nettoyées et régénérées, sont transmises par les mêmes parois et/ou par d'autres parois.

4. Procédé suivant l'une des revendications 1 à 3, caractérisé par le fait que le mélange s'effectue d'une manière continue ou par à-coups.

5. Procédé selon la revendication 2, caractérisé en ce que le générateur d'impulsions travaille selon une logique temporelle et fixe l'amplitude et la forme des impulsions.